# EUROPEAN PATENT SPECIFICATION

(11) **EP 4 570 443 B1**
(45) Date of publication and mention of the grant of the patent: **09.12.2026**
(21) Application number: 24219319.1
(22) Date of filing: 12.12.2024
(51) Int. Cl.: B25J 1/04, B66F 9/06, B66C 1/02

(54) **MOBILE ELEVATING PLATFORM COMPRISING A HANDHELD PACKAGE VACUUM PICKING UNIT**
MOBILE HEBEBÜHNE MIT PAKETSAUGAUFNAHMEEINHEIT
PLATEFORME ÉLÉVATRICE MOBILE AVEC UNITÉ DE PRÉLÈVEMENT D'EMBALLAGE PAR SUCTION

(30) Priority: 15.12.2023 IT 202300026769
(43) Date of publication of application: 18.06.2025
(73) Proprietor: BRAVI-PLATFORMS S.R.L., 60022 Castelfidardo (AN) (IT)
(72) Inventor: BRAVI, Pierino, 60022 Castelfidardo (Ancona) (IT)
(74) Representative: Vatti, Francesco Paolo

(56) References cited:
- WO-A1-2017/037442
- DE-C- 467 066
- US-A- 5 931 633

## Description

### FIELD OF THE INVENTION

The present invention relates to the field of logistics. In particular, it relates to a package picking unit, which can be integrated in a mobile elevating platform, in particular, although not exclusively, to be used in the handling of packages in shelves inside a warehouse.

### DESCRIPTION OF THE PRIOR ART

Warehouse logistics is concerned with, among other aspects, managing in an efficient and optimised manner the storage and handling activities of goods within an organisation. This discipline involves a series of processes and techniques, aimed at maximising efficient use of space, minimising operational costs and improving overall efficiency. In recent years, with the expansion of entrepreneurial logic based on digital commerce (e-commerce), warehouses have increased in size and capacity, and there has been some increase in goods traffic within warehouses.

For logical efficiency reasons, racking is used, i.e. structures made up of vertical, horizontal and diagonal struts. The struts accommodate shelves, which are normally about 1 metre deep. The racking height varies, but racking is usually found in warehouses with heights ranging from 3 to 15 metres, with various subdivisions in shelves. In some cases, the racking is higher.

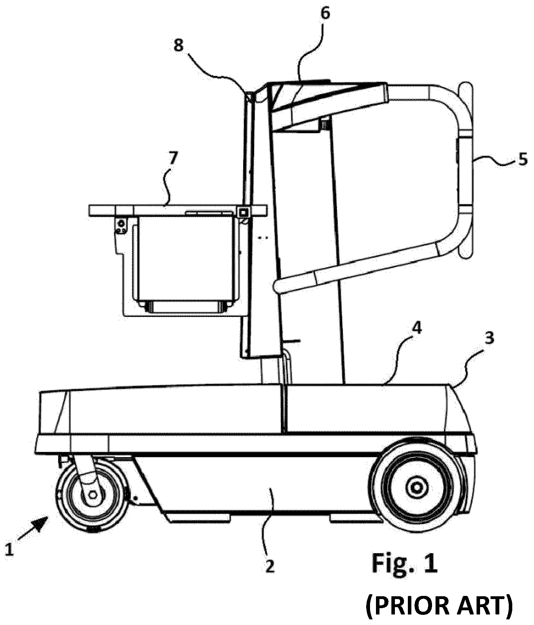

Usually, mobile elevating platforms are used to load/unload packages. A mobile elevating platform 1, an example of the prior art, is illustrated in Figure 1. The mobile elevating platform 1 is formed by a base chassis 2, usually made of steel or light alloy.

The base chassis 2 houses a motor and vertical lifting systems, suitable for lifting a lifting platform 3, consisting of an operator station 4, equipped with a fall arrest system 5 and controls 6. It is understood that, as the logistics field is concerned here, the operator is advantageously allowed to work standing, safely, using the fall arrest system 5, which consists of a gate that closes automatically, for example through one or more springs, once the operator has entered. The controls 6 include, in addition to driving systems, control systems for the lifting platform 3.

The lifting platform 3 also includes one or more surfaces for temporary support 7, which are advantageously installed on the frame 8. Advantageously, the one or more surfaces for temporary support 7 are horizontal plates, adjustable in height. Thus, depending on the package to be picked up, provision is made for the operator to work more comfortably.

The vertical movement of the platform 3 involves the joint transit of the operator station 4 and one or more surfaces for temporary support 7.

During loading/unloading of packages from the racking, the operator drives, using the controls 6, the platform 1 as for a normal vehicle near the racking. In particular, during unloading operations, the racking is intuitively approached to bring the operator as close as possible to the packages, preferably parallel to the racking installation direction. Then, depending on the weight of the package and where it is placed on the shelf, the operator rotates his back and brings his hands close to the package to be picked; lastly, the operator transports the package on one or more surfaces for temporary support 7. Alternatively, if the package is further towards the back of the shelf width, or if it weighs more, the operator is forced to rotate his body completely to reach the package in front and bend his back towards the package, leaning into the shelf and exerting himself to pick it up.

The operator is required to unload many packages, in the order of, for example, a hundred a day and performing these manoeuvres means there is an increased risk of injury and, in general, these actions contribute to the development of occupational diseases related to chest rotations and to movements that are not always correct and balanced.

US 5 931 633 discloses a mobile elevating platform according to the preamble of claim 1.

WO 2017/037 442 describes a tube lifting apparatus connected to a vacuum system.

US 11 072 079 describes a pick-up stick for picking up flat objects from the floor, which pick-up stick is equipped with a battery-powered suction device.

CN 220 051 827 describes a pen suction device comprising an outer shell, a vacuum generation assembly, a vacuum pipeline assembly, and a pressure maintaining part. The vacuum pipeline assembly is fitted on the outer shell and communicates with the vacuum generation assembly. The vacuum pipeline assembly exits by the first end of the outer shell and is in communication, remaining detached, with the vacuum maintaining assembly.

JP 2012/033 723 relates to vacuum tweezers for picking up semiconductor wafers.

DE 467 066 relates to a device for lifting highly layered objects with flat and smooth surfaces, using the vacuum action.

There is a clear need for a means to facilitate the work of a logistics operator, in particular to facilitate the work of picking up packages stored on racking that can be reached by elevation.

### SUMMARY OF THE INVENTION

The problem underlying the invention is therefore to propose a mobile elevating platform with an integrated package picking unit.

This purpose is achieved by means of a mobile elevating platform, comprising a base chassis comprising a motor and a vertical lifting system, said chassis having a lifting platform, an operator station, controls, a frame and one or more surfaces for temporary support; said platform also includes a vacuum pump, connected to a package picking unit comprising a suction cup, equipped with a hole axially aligned with a stiff hose; said suction cup is connected through a joint to said stiff hose, ending with a handle including a button; said handle is connected to a flexible hose, wound in a hose reel; wherein said button activates said vacuum pump, sucking air from the hole of said suction cup.

In other embodiments, the mobile elevating platform has the package picking unit which also includes attachment means, suitable for attaching said unit (100) to said mobile elevating platform.

In other embodiments, the frame, the surfaces for temporary support and the stiff body of the package picking unit are equipped with attachment means, chosen between means of magnetic attachment or flexible elements.

In other embodiments, the joint is spherical and the flexible hose is equipped with a stop.

In other embodiments, the mobile elevating platform has the vacuum pump integrated in said base chassis.

The dependent claims describe preferred features of the invention.

### BRIEF DESCRIPTION OF THE DRAWINGS

Other features and advantages of the invention will become clearer from the following detailed description of a preferred embodiment, given purely by way of example and in a non-limiting manner, and illustrated in the appended drawings in which:
Figure 1 shows an example mobile elevating platform, according to the prior art, used in the field of logistics; and
Figure 2 shows a particularly preferred embodiment of a package picking unit according to the present invention.

### DETAILED DESCRIPTION OF A PREFERRED EMBODIMENT

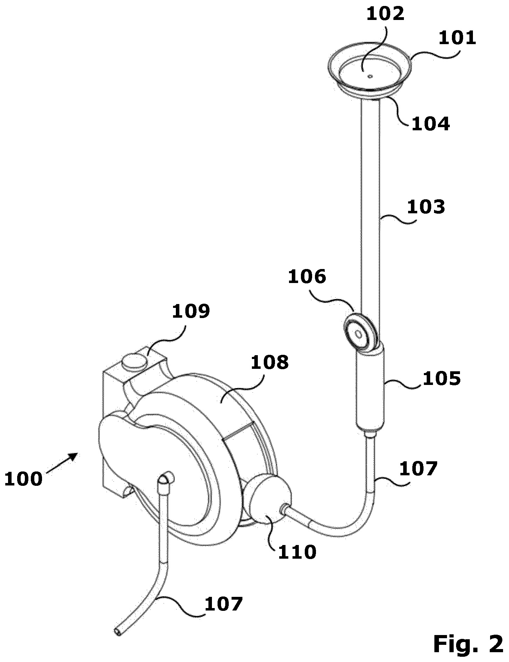

Figure 2 illustrates an integrable package picking unit 100, according to the present invention. The picking unit 100 comprises a suction cup 101, equipped with a hole 102 and fixed to a stiff hose 103, preferably through a joint 104. Preferably, the stiff hose 103 is a steel tube. Yet more preferably, it is a galvanised steel tube. Preferably, the joint 104 is of the spherical type. The stiff hose 103 advantageously has a handle 105, coated with ergonomic material, such as for example rubber.

Advantageously, the stiff hose 103 is extendable by means of a telescopic mechanism.

On the handle 105, there is a button 106, the role of which will be explained later. The handle 105 connects the stiff hose 103 to a flexible hose 107. The flexible hose 107 can be wound in a hose reel 108, equipped with attachment means 109, suitable for attaching said unit 100 to a mobile elevating platform, of the type represented by the platform 1 in Figure 1. Preferably, there is a stop 110 which, in a manner that is known per se, prevents excessive winding of the flexible hose 107, which would involve an excessive retraction of the handle 105, in the event making the use of the unit 100 awkward for the operator.

The hose reel 108 contains, in a manner that is known per se, a reel on which the flexible hose 107 is wound. In some embodiments, the hose reel 108 can also comprise known systems to facilitate the winding of the flexible hose 107.

The hose 107 is then connected, by means of a pneumatic connection, to vacuum pumps. It is also understood that the hole 102 is aligned with the stiff hose 103. In embodiments in which the unit is coupled to a vacuum pump, the unit 100 provides for the use of gaskets each time two components of the unit 100 are connected.

Essentially, said suction cup 101 also comprises a hole 102, axially aligned with said stiff hose 103 and said flexible hose 107 is connected to a vacuum pump, the operation of which is controlled by the button 106.

Preferably, the package picking unit 100 is integrated on a mobile elevating platform, of the type illustrated in Figure 1. The vacuum pumps are integrated, both electronically and mechanically, in the mobile elevating platform, normally in its motor compartment, such that the switching on and off of a pump can preferably be accessed by the controls of a mobile elevating platform. Preferably, the electronic and mechanical components of the unit 100 are installed in the base chassis of a mobile elevating platform.

Preferably, the unit 100 is installed on the frame, such that an operator can use it easily. In particular, it is installed on the mobile elevating platform using attachment means 109, while the stiff hose 103 is attached, still to the frame, using known means, such as for example catches, for example made of hard plastic, such that it is convenient for the operator to temporarily attach the stiff hose 103 during operations. Alternatively, magnetic temporary attachment means can be provided for on the stiff hose 103 and magnetic attachment means at various points on the mobile elevating platform (e.g. on the frame and on the surfaces for temporary support).

A mobile elevating platform, equipped with a package picking unit 100, makes the work of the operator less stressful and reduces the risks of injury. For example, in a manner similar to the prior art, the operator can drive and move himself close to a racking structure, while remaining parallel to the installation direction. Therefore, still in accordance with the prior art, the operator will lift himself in order to reach the shelf which has the package to be picked. At this point, differently from the prior art, the operator activates the vacuum pump using the controls and takes the handle 105 of the unit 100. Next, by extending his arm, without the need to minimally rotate his chest towards the shelf, the operator will simply rest the suction cup 101 on any surface of said package, activating the vacuum pump by means of the button 106, and initiating suction. The joint 104 enables the operator to work even with less precision, since suction is maintained even if the suction cup 101 is slightly misaligned with the package. In other words, a small degree of non-perpendicularity is advantageously tolerated between the surface of the package and the suction cup 101. Next, the operator can simply transport the package on the surfaces for temporary support, hauling it with the handle 105. The unit 100 provides for easily picking up packages that even weigh more than 5 kg. It is understood that, preferably, a low-vacuum pump is installed, but in other embodiments it is possible to provide for the installation of a medium-vacuum pump, or even high-vacuum, to strengthen the suction capability of the unit 100, so as to handle heavier packages.

If the package turns out to be too heavy, the operator can use his hand that is not gripping the handle 105 to support the picked package by its base.

In some embodiments, provision is made for the button 106 to also execute a return of air, in a manner that is known per se, in order to quickly remove the vacuum and accelerate the detachment of the package from the unit 100.

Other embodiments use pumps generating a low vacuum for picking, such that it is at a sufficient level for the operator to deform the suction cup, for example it is possible to simply keep the package attached and move the handle towards himself or away from himself to remove the vacuum.

In another embodiment of the present invention, the stiff hose of the unit provides for being extendable by means of a telescopic operation. The telescopic operation can be actuated in the present invention through known means.

The picking unit according to the present invention enables goods to be picked from a shelf and deposited on the transport deck of a mobile platform safely and completely ergonomically, avoiding the need for the operator to lean out from the mobile platform and rotate his chest in a harmful way.

It is understood that the invention must not be considered to be limited to the particular arrangement illustrated above, which forms only one example embodiment thereof, but that various variants are possible, all within the capabilities of a technician skilled in the art, without thereby departing from the scope of protection of said invention, which scope is defined in the claims that follow.

## Claims

1. Mobile elevating platform (1), comprising a base chassis (2) comprising a motor and a vertical lifting system, said chassis (2) having a lifting platform (3), an operator station (4), controls (6), a frame (8), and one or more surfaces for temporary support (7);
**characterised in that** it also includes a vacuum pump, connected to a package picking unit (100) comprising a suction cup (101) having a hole (102) axially aligned with a stiff hose (103); said suction cup (101) is connected through a joint (104) to said stiff hose (103) ending with a handle (105) including a button (106);
said handle (105) is connected to a flexible hose (107), wound in a hose reel (108); wherein said button (106) activates said vacuum pump, sucking air from the hole (102) of said suction cup (101).

2. Mobile elevating platform according to Claim 1, **characterised in that** said package picking unit (100) also includes attachment means (109), suitable for attaching said unit (100) to said mobile elevating platform (1).

3. Mobile elevating platform according to Claim 2, **characterised in that** the frame (8) and the surfaces for temporary support (7) and the stiff body (103) of the package picking unit (100) are equipped with means of temporary attachment, chosen between means of magnetic temporary attachment or flexible elements.

4. Mobile elevating platform according to Claims 1 to 3, **characterised in that** said joint (104) is spherical and the flexible hose (107) is equipped with a stop (110).

5. Mobile elevating platform according to any one of Claims 1 to 4, **characterised in that** said vacuum pump is integrated in said base chassis (2).

## Revendications

1. Plateforme élévatrice mobile (1), comprenant
un châssis de base (2) comprenant un moteur et un système de levage vertical, ledit châssis (2) présentant une plate-forme de levage (3), un poste opérateur (4), des commandes (6), un cadre (8), et une ou plusieurs surfaces pour un support temporaire (7) ;
**caractérisée en ce qu'**elle comporte également une pompe à vide, reliée à une unité de prélèvement d'emballage (100) comprenant une ventouse (101) présentant un trou (102) aligné axialement avec un tuyau rigide (103) ; ladite ventouse (101) est reliée par une articulation (104) audit tuyau rigide (103) se terminant par une poignée (105) comportant un bouton (106) ;
ladite poignée (105) est reliée à un tuyau flexible (107), enroulé dans un dévidoir (108) ; dans lequel ledit bouton (106) active ladite pompe à vide, aspirant de l'air du trou (102) de ladite ventouse (101).

2. Plateforme élévatrice mobile selon la revendication 1, **caractérisée en ce que** ladite unité de prélèvement de colis (100) comporte également des moyens de fixation (109), adaptés pour fixer ladite unité (100) à ladite plateforme élévatrice mobile (1).

3. Plateforme élévatrice mobile selon la revendication 2, **caractérisée en ce que** le cadre (8) et les surfaces pour un support temporaire (7) et le corps rigide (103) de l'unité de prélèvement de colis (100) sont équipés de moyens de fixation temporaire, choisis entre des moyens de fixation temporaire magnétiques ou des éléments flexibles.

4. Plateforme élévatrice mobile selon les revendications 1 à 3, **caractérisée en ce que** ladite articulation (104) est sphérique et le tuyau flexible (107) est équipé d'une butée (110).

5. Plateforme élévatrice mobile selon l'une des revendications 1 à 4, **caractérisée en ce que** ladite pompe à vide est intégrée dans ledit châssis de base (2).

## Patentansprüche

1. Mobile Hebebühne (1), bestehend aus
ein Grundgestell (2) mit einem Motor und einem vertikalen Hebesystem, wobei das besagte Gestell (2) eine Hebeplattform (3), einen Bedienerplatz (4), Steuerungen (6), einen Rahmen (8) und eine oder mehrere Flächen zur vorübergehenden Abstützung (7) aufweist;
**dadurch gekennzeichnet, dass** sie ferner eine Vakuumpumpe umfasst, die mit einer Paketaufnahmeeinheit (100) verbunden ist, die einen Saugnapf (101) mit einem Loch (102) aufweist, das axial mit einem steifen Schlauch (103) ausgerichtet ist; wobei der Saugnapf (101) durch eine Verbindung (104) mit dem steifen Schlauch (103) verbunden ist, die mit einem Griff (105) endet, der einen Knopf (106) aufweist;
wobei der Griff (105) mit einem flexiblen Schlauch (107) verbunden ist, der in einer Schlauchtrommel (108) aufgewickelt ist; und wobei der Knopf (106) die Vakuumpumpe aktiviert, die Luft aus dem Loch (102) des Saugnapfes (101) ansaugt.

2. Mobile Hebebühne nach Anspruch 1, **dadurch gekennzeichnet, dass** die Paketaufnahmeeinheit (100) ferner Befestigungsmittel (109) umfasst, die geeignet sind, die Einheit (100) an der mobilen Hebebühne (1) zu befestigen.

3. Mobile Hebebühne nach Anspruch 2, **dadurch gekennzeichnet, dass** der Rahmen (8) und die Flächen zur vorübergehenden Abstützung (7) und der steife Körper (103) der Paketaufnahmeeinheit (100) mit Mitteln zur vorübergehenden Befestigung ausgestattet sind, wobei Mitteln zur magnetischen vorübergehenden Befestigung oder flexible Elemente auswählbar sind.

4. Mobile Hebebühne nach einem der Ansprüche 1 bis 3, **dadurch gekennzeichnet, dass** das Gelenk (104) kugelförmig ist und der flexible Schlauch (107) mit einem Anschlag (110) versehen ist.

5. Mobile Hebebühne nach einem der Ansprüche 1 bis 4, **dadurch gekennzeichnet, dass** die Vakuumpumpe in das Grundgestell (2) integriert ist.
